(19) Europäisches Patentamt
European Patent Office
Office européen des brevets

(11) **EP 1 599 757 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(21) Anmeldenummer: **04711576.1**

(22) Anmeldetag: **17.02.2004**

(51) Int Cl.:
**G02F 1/01** (2006.01)   **H01S 3/00** (2006.01)

(86) Internationale Anmeldenummer:
**PCT/EP2004/001473**

(87) Internationale Veröffentlichungsnummer:
**WO 2004/077135 (10.09.2004 Gazette 2004/37)**

(54) **VERFAHREN UND ANORDNUNG ZUR VERÄNDERUNG EINER WELLENFRONT EINES OPTISCHEN STRAHLS**

METHOD AND DEVICE TO MODIFY A WAVEFRONT OF AN OPTICAL BEAM

PROCEDE ET DISPOSITIF PERMETTANT DE MODIFIER LE FRONT D'ONDE D'UN FAISCEAU OPTIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **26.02.2003 EP 03405128**

(43) Veröffentlichungstag der Anmeldung:
**30.11.2005 Patentblatt 2005/48**

(73) Patentinhaber: **Universität Bern**
**3012 Bern (CH)**

(72) Erfinder:
• **GRAF, Thomas**
**D-71154 Nufringen (DE)**
• **WYSS, Eduard**
**CH-3700 Spiez (CH)**

(74) Vertreter: **Roshardt, Werner Alfred**
**Keller & Partner**
**Patentanwälte AG**
**Schmiedenplatz 5**
**Postfach**
**3000 Bern 7 (CH)**

(56) Entgegenhaltungen:
**EP-A- 0 829 745    EP-A- 1 168 533**
**US-A- 4 671 624**

• **WYSS E ET AL: "THERMOOPTICAL COMPENSATION METHODS FOR HIGH-POWER LASERS" IEEE JOURNAL OF QUANTUM ELECTRONICS, IEEE INC. NEW YORK, US, Bd. 38, Nr. 12, Dezember 2002 (2002-12), Seiten 1620-1628, XP001174639 ISSN: 0018-9197**

## Beschreibung

### Technisches Gebiet

Die Erfindung betrifft ein Verfahren zur Veränderung einer Wellenfront eines optischen Strahls und eine Anordnung mit einer Beeinflussungseinheit zur Dürchführung eines Verfahrens zur Veränderung einer Wellenfront eines optischen Strahls, wobei die Beeinflussungseinheit in den Strahlengang des optischen Strahls einbringbar und den Strahlquerschnitt des optischen Strahls annähernd vollständig aufnehmen kann.

Als optische Strahlen werden nachfolgend Strahlen einer elektromagnetischen Strahlung im sichtbaren, infraroten und ultravioletten Wellenlängenbereich verstanden. Also Strahlung in einem Wellenlängenbereich von etwa 100 nm bis 15 $\mu$m. Der Verlauf der Wellenfront in einem derartigen Strahl lässt sich als gleicher normierter augenblicklicher Amplitudenwert der elektrischen definieren. Die Form einer Wellenfront kann mit einem ShacK-Hartmann-Detektor ausgemessen werden.

Die Wellenfront definiert Orte gleicher Laufzeit einer elektromagnetischen Strahlung in einem Strahl ausgehend von einer senkrecht zur Strahlachse verlaufenden Ebene; in der Regel wird man von der Strahltaille als Referenzebene ausgehen. Der Begriff der Wellenfront ist nicht mit der Intensitätsverteilung (z.B. Profil eines gaußschen Strahls über dem Strahlquerschnitt zu verwechseln.

### Stand der Technik

Eine Wellenfront eines Strahls kann nun durch die nachfolgend bekannten Verfahren verändert werden.

Eine Wellenfront eines Strahles kann durch eine Verformung einer Oberfläche, auf die der betreffende Strahl geführt wird, oder durch eine Verstellung einer Vielzahl von voneinander unabhängig arbeitender aktiver Elemente verändert werden.

In der WO 02/35274 wurde ein deformierbarer Spiegel beschrieben, der die Wellenfront eines auf ihn auftreffenden Strahles veränderte. Der Spiegel hatte mechanische, hydraulische, piezo-elektrische oder elektromechanische Aktuatoren zur Verformung seiner Spiegeloberfläche. Die spiegelnde Fläche war mit Abstandshaltern an einer Membran befestigt, an der die Aktuatoren angriffen. Zwischen der Rückseite der spiegelnden Fläche und der Membran wurde eine Kühlfüssigkeit zur Spiegelkühlung hindurch geleitet.

In der EP-A 1 191 377; der EP-A 0 943 947; der US-A 4,934,803; der US-A 4,492,431 und der EP-A 0 744 641 sowie der Veröffentlichung G. Vdovin et al., "Deformable mirror with thermal actuators", Optics Letters, Vol. 27, No. 9, Seite 677-679, 1. Mal 2002 ist jeweils ein verformbarer Spiegel beschrieben, der mit einer Vielzahl an der Spiegelunterseite angreifenden aktiven, voneinander unabhängig arbeitenden Elementen (z.B. piezo-elektrische Transducer, elektrodistortive Elemente {Biei-Magnesium-Niobat}; Druckkolben, Widerstandselemente) verformbar war.

Eine Wellenfront eines Strahles kann auch durch eine Verformung einer gesamten Oberfläche, auf die der betreffende Strahl geführt wird, durch einen einzigen Aktuator erfolgen.

In der EP-A 1 118 897 und der EP-A 1 030 206 ist ein an einer Spiegelfläche axial angreifender Aktuator beschrieben. Die Spiegeiuerformung erfolgte durch dessen elastische Verformung. Die Sphäre der Spiegelfläche liess sich ausser über die Querschnittgeometrie eines Halteringes auch über eine zentralsymmetrische Schwächung der Spiegelplatte beeinflussen, sowie durch statischen Überdruck einer fluidgefüllten Kammer hinter der Spiegelplatte. In der Spiegelplatte entstehende Vetlustwärme wurde über eine Fluidfüllung der Kammer abgeführt.

In der SU 1 597 834 wurde eine Bimetallplatte zur Herstellung eines verformbaren Spiegels verwendet.

Eine Veränderung einer Wellenfront eines Strahls kann ferner durch dessen Reflexion an einer durch eine Druckbeaufschlagung verformten Oberfläche erfolgen.

In der US-A 5,889,256 war ein verformbarer Spiegel als Gehäusedeckel beschrieben. Wurde der mit dem Spiegel abgedeckte Gehäuseinnenraum mit Vakuum beaufschlagt, erfolgte ein Nachinnenziehen des Spiegelmittelpunktes, wodurch die Abbitdungseigenschaf ten des Spiegels verändert wurden.

Eine Wellenfront eines Strahls kann zudem durch eine Verwendung einer Vielzahl ansteuerbarer, reflektierender Elemente, wie in der EP-A 1 050 766 beschrieben, verändert werden. Die einzelnen Spiegelelemente waren derart miteinander verbunden, dass sie durch Anlegen einer elektrischen Spannung an eine in der Nähe befindliche Elektrode ausgelenkt werden konnten. Vereinfacht ausgedrückt, erfolgte die Auslenkung analog zu der lediglich mit Unterdruck arbeitenden Einheit.

In der WO 01/48747 ist ein optischer Wellenfrontmodulator beschrieben, der einen ferroelektrischen Flüssigkristall aufweist, der beidseits mit einem transparenten Elektrodenstrukturmuster zur Veränderung seines örtlichen Brechungsindexes versehen war.

In der US-A 4,264,146 ist ein gekühlter Laserspiegel beschrieben, der in zwei parallel zur Spiegeloberfläche senkrecht zueinander verlaufenden Richtungen im Bereich der Spiegelober- und -unterseite unterschiedlich gekühlt wurde.

In der EP 1 168 533 ist eine Kompensation der Wellenfront beschrieben. Analoges beschreibt die Veröffentlichung Wyss et al.: "Thermooptical compensation methods for high-power lasers", IEEE Journal of Quantum Electronics., IEEE INC. New York US, Bd. 38, Nr. 12, Dezember 2002, Seiten 1620-1628, XP001174639, ISSN: 0018-9197. Das Beispiel einer Anordnung zur Veränderung einer Wellen front mit einer kühlung entlang der optischen Achse, das im Abschnitt IV. beschrieben wird, weist alle Merkmale der Präambel der Ansprüche 1 und 2 auf. In den anderen Beispielen soll die Kompensation durch radiale Temperaturgradienten in optischen Komponenten hervorgerufene optische Änderungen eliminieren. In der EP 1 168 533 wird angestrebt in der optischen Komponente und im Kompensationsmedium eine annähernd gleiche radiale Erwärmungsverteilung zu erreichen. Die radialen Temperaturgradienten werden erreicht, indem beide Medien an ihrem Umfang eine gleiche Kühlung erfahren.

In der US 4,679,624 ist eine Beeinflussungseinheit für einen optischen Strahl beschrieben. Die Einheit hat einen zylindrischen Körper aus einem optischen Material, der mit einem heiz- bzw. kühlbarem Element ummantelt ist. Dieses Element ist wiederum mit einer Hülse aus einem schlecht wärmeleitenden Material ummantelt. Die Hülse ist mit einer Wärmesenke ummantelt.

Der zylindrische Körper dient als optischer Kompensator und kann beispielsweise aus BK7 oder einem doppelbrechenden Material bestehen. Das Element ist eine durch einen elektrischen Strom heizbare Spule oder ein Widerstandsbelag; es kann auch ein Peltierelement zum Kühlen verwendet werden.

Zur besseren Wärmeableitung kann die Stirnseite des Körpers mit einer gut wärmeleitenden Saphirscheibe belegt sein. Der Rand der Saphirscheibe ist dann mit einem Aluminiumring als Wärmesenke kontaktiert. Der zylindrische optische Körper soll aufgrund der mantelförmigen Temperaturbeaufschlagung und einer Kühlung der Stirnflächen doppelbrechend und als variable Linse wirken.

## Darstellung der Erfindung

### Aufgabe der Erfindung

Aufgabe der Erfindung ist es, die Wellenfront eines Strahles auf preisgünstige Art und Weise massgeschneidert zu beeinflussen, wobei derartig beeinflusste Strahlen bevorzugt in Hochleistungslasern zur Erzeugung von sogenannten "custom-modes" einsetzbar sind.

### Lösung der Aufgabe

Die Aufgabe wird erfindungsgemäss dadurch gelöst, dass eine flächige Modulationsschicht quer zur optischen Achse des Strahls derart angeordnet wird, dass ein Strahlquerschnitt des optischen Strahls annähernd vollständig aufgenommen wird. Die Modulationsschicht wird wenigstens auf einer ihrer beiden Grundflächen flächig gekühlt, örtlich mit einem Wärmemuster belegt und die Schichtdicke derart dünn gewählt, dass eine Wärmeausbreitung quer zur optischen Achse vernachlässigbar klein ist. Der Ausdruck Grundfläche wird im Gegensatz zur Mantelfläche verwendet. Ein Zylinder hat z.B. zwei Grundflächen und eine seitliche Mantelfläche. Bei einem geraden Kreiszylinder wären zwei zueinander parallele Grundflächen vorhanden.

Bei der Modulationsschicht müssen jedoch die Schichtdicke wiederum derart dick und das Wärmemuster so gewählt werden, dass die Wellenfront des einfallenden Strahls ausgehend von einer thermischen Beaufschlagung der Modulationsschicht durch das Wärmemuster veränderbar ist. Im Gegensatz zum Stand der Technik wird bei der Erfindung unter Aufbringen eines Wärmemusters in bzw. auf die Modulationsschicht wenigstens deren eine Grundfläche flächig gekühlt. Das in die Modulationsschicht eingeprägte Wärmemuster wird dadurch über den Strahlquerschnitt nicht verschmiert.

Das Wärmemuster wird hier in eine Fluid- oder Gelschicht als flächige Modulationsschicht eingeprägt. Als Fluid wird man vorzugsweise Flüssigkeiten und als Gele vorzugsweise Curing-Gele mit den unten beschriebenen Eigenschaften verwenden, wobei deren Viscosität vorzugsweise über 100 cP liegen sollte. Anstelle von Fluiden und Gelen könnten auch Festkörper verwendet werden, wobei deren optische Eigenschaften sich durch eine Wärmemusterbeaufschlagung in der Regel weniger stark ändern.

Im Gegensatz zur Erfindung verfolgt die eingangs erwähnte EP 1 168 533 ein anderes Ziel. Die EP 1 168 533 prägt dem Kompensationselement und der optischen Komponente denselben optischen Temperaturgradienten durch eine gleiche radiale Kühlung und einen innigen Kontakt dieser beiden Elemente auf. Das will die Erfindung nicht. Die Erfindung arbeitet nicht mit einer radialen Kühlung, also einer koaxial zur Strahlachse angreifenden Kühlung, sondern mit einer flächigen Kühlung wenigstens einer Grundfläche der Modulationsschicht. Etwas locker ausgedrückt: Die Wellenfront des zu beeinflussenden Strahls "durchstösst die Kühlffäche". Auch wird bei der Erfindung ein "extern erzeugtes" Wärmemuster aufgeprägt und nicht wie in der EP 1 168 533 mit der Absorption der Strahlung des optischen Strahles gearbeitet, dessen Wellenfront beeinflusst werden soll.

Zur Lösung der Aufgabe verwendet man eine erfindungsgemässe Anordnung, welche zur Veränderung einer Wellenfront eines optischen Strahls mit einer in einen Strahlengang des Strahls einbringbaren Beeinflussungseinheit und einer ein Wärmemuster erzeugenden Wärmequelle arbeitet Die Wärmequelle wirkt auf die Beeinflussunggelnheit. Die Beeinflussungseinheit hat wenigstens eine quer zur optischen Achse des einfallenden Strahls verlaufende, flächige Kühlplatte sowie eine auf dieser angeordnete, die Wärme der Wärmequelle absorbierenden Fluid- oder Gelschicht als Modulationsschicht mit einer flächigen Ausdehnung. Wenigstens eine der Grundflächen der Modulationsschicht ist im innigen Kontakt mit wenigstens einer Kühlfläche. Die Ausdehnung ist gross genug, um den Strahlquerschnitt annähernd vollständig aufzunehmen. Die Schichtdicke der Fluid- oder Gelschicht ist derart klein ausgebildet, dass lediglich ein verschwindend geringer Wärmefluss quer zur Strahlrichtung erfolgen kann. Die Schichtdicke ist allerdings derart dick, dass die Wellenfront des einfallenden Strahls ausgehend von einer thermischen Beaufschlagung des Fluids bzw. Gels durch das Wärmemuster veränderbar ist.

In der erfindungsgemässen Anordnung wird zur Lösung der Aufgabe eine erfindungsgemässe Beeinflussungseinheit verwendet. Die Beeinflussungseinheit ist in den Strahlengang des optischen Strahls einbringbar und kann den Strahlquerschnitt des optischen Strahls annähernd vollständig aufnehmen. Die Beeinflussungseinheit hat wenigstens eine flächig kühlende Kühlplatte und eine mit einem Wärmemuster belegbare, mit einer Grundfläche auf einer Oberseite der wenigstens einen Kühlplatte im innigen Kontakt liegende Fluid- oder Gelschicht als Modulationsschicht. Die Schichtdicke der Fluid- oder Gelschicht-ist-derart dünn gewählt, dass eine flächige Wärmeausbreitung vernachlässigbar ist. Ferner ist deren Schichtdicke derart dick gewählt, dass die Wellenfront des einfallenden Strahls ausgehend von einer thermischen Beaufschlagung des Fluids bzw. Gels durch das Wärmemuster veränderbar ist.

Die Kühlplatte der Beeinflussungseinheit kann nun je nach deren Ausgestaltung und Verwendungszweck unterschiedlich ausgebildet werden.

Das Material der Kühlplatte kann transparent und ohne nennenswerte Absorption für die Wärme sowie auch transparent und ohne nennenswerte Absorption für die optische Strahlung sein.

Das Fluid oder Gel kann transparent mit einer vernachlässigbaren Absorption für die optische Strahlung, deren Wellenfront beeinflusst werden soll, sein; es kann aber auch eine vorgegebene Absorption für die optische Strahlung haben.

Die Fluid- oder Gelschicht kann mit einer ihrer Grundflächen auf einer einzigen hinteren oder vorderen (bezogen auf die Strahlausbreitungsrichtung) Kühlplatte liegen. Sie kann aber auch durch eine vordere und eine hintere Kühlplatte begrenzt sein. Sind eine vordere und eine hintere Kühlplatte vorhanden, ist die Fluid- oder Gelschicht zwischen massiven Platten eingeschlossen. Zur Beeinflussung der Wellenfront wird dann im Wesentlichen auf eine durch eine Dichteänderung hervorgerufene Brechungsindexänderung der Fluid- oder Gelschicht abgestellt. Von den massiven Platten kann eine oder beide Platten als Kühlplatte(n) ausgebildet sein, wobei eine bzw. beide Kühlplatten nicht unbedingt zueinander parallele Grundflächen haben müssen. Die Grundflächen können eben sein oder einen Winkel miteinander einschliessen; auch können die Grundflächen ein nicht ebenes (planes) Oberflächenprofil haben. Wird nur eine einzige Kühlplatte verwendet, wird im Wesentlichen auf eine Dickeänderung der Fluid-oder Gelschicht abgestellt. Auf der Fluid- oder Gelschicht kann dann ein sich entsprechend der Dickeänderung verformender Schichtbelag aufgebracht werden. Ist dieser Belag transparent, wird man in Transmission arbeiten, wobei dann die Beeinflussungseinheit lediglich einmal vom zu beeinflussenden Strahl durchstrahlt werden kann. Es können aber auch nur der transparente Belag und die Fluid- oder Gelschicht durchstrahlt werden und dann eine Reflexion an einem nachfolgenden Spiegel erfolgen. Hierbei wird dann die Fluid- oder Gelschicht zweimal durchlaufen.

Der Belag kann aber auch als Vorderfläche reflektierend ausgebildet werden.

Die Beeinflussungseinheit kann aber auch derart ausgebildet sein, dass eine für den optischen Strahl transparente Kühlplatte und eine auf der der Kühlplatte entgegengesetzten Grundfläche der Fluid- oder Gelschicht angeordnete Heizschicht vorhanden ist, welche ein örtlich unterschiedliches Wärmemuster erzeugen kann.

Das erfindungsgemässe Verfahren sowie die erfindungsgemässe Anlage arbeiten mit der oben angeführten erfindungsgemässen Beeinflussungseinheit. Diese Einheit kann als thermo-optischer Wellenfrontmodulator bezeichnet werden. Beim thermo-optischen Wellenfrontmodulator wird die thermische Dispersion dn/dT und/oder die thermische Expansion dL/dT des Materials der Fluid- oder Gelschicht ausgenützt. Obwohl selbstverständlich auch andere Anwendungen möglich sind, ist ein Einsatz vorzugsweise in Hochleistungslasern zur Erzeugung von "custom-modes" angezeigt. Es kann aber z. B. auch ein Einsatz einer Beeinflussungseinheit vorgesehen werden, um eine Kompensation thermisch induzierter optischer Aberationen eines Laserstabes zu erreichen.

## Kurze Beschreibung der Zeichnungen

Im Folgenden werden Beispiele des erfindungsgemässen Verfahrens, der erfindungsgemässen Anlage sowie der erfindungsgemässen Beeinflussungseinheit anhand der nachfolgenden Zeichnungen näher erläutert. Weitere Vorteile der Erfindung ergeben sich aus dem Beschreibungstext. Es zeigen:

Fig. 1    einen Längsschnitt durch eine Ausführungsvariante der erfindungsgemässen Beeinflussungseinheit mit zwei flächigen Kühlplatten,

Fig. 2      eine Draufsicht auf die in **Figur 1** dargestellte Beeinftussungseinheit in der dort angegebenen Blickrichtung II,

Fig. 3      ein Diagramm, in dem über einer von der Strahlachse ausgehenden Querkoordinate **x** der Fluid- oder Gelschicht, welche senkrecht zur optischen Achse des einfallenden optischen Strahls liegt, ein Temperaturverlauf $T(x)$ **{Fig. 3a},** die durch den Temperaturverlauf $T(x)$ hervorgerufene Brechungsindexänderung $n(x, T)$ **{Fig. 3b}** und der Verlauf der durch die Brechungsindexänderung hervorgerufenen Änderung der Lichtgeschwindigkeit $C_{Medium}(x)$ **{Fig. 3c}** in einer transparenten Schicht dargestellt sind,

Fig. 4      einen Durchgang einer ebenen Wellenfront durch eine thermo-optisch aktive Schicht (Fluid- oder Gelschicht) mit den in den **Figuren 3a-c** dargestellten Eigenschaften,

Fig. 5      einen Längsschnitt durch eine als thermo-optisch-adaptiver Spiegel ausgebildete Ausführungsvariante der erfindungsgemässen Beeinflussungseinheit mit lediglich einer Kühlplatte und einem Spiegelbelag,

Fig. 6      einen Längsschnitt durch eine Variante zu dem in Figur 5 dargestellten thermooptisch-adaptiven Spiegel,

Fig. 7      einen Längsschnitt durch eine Variante einer als Spiegel wirkenden Beeinflussungseinheit,

Fig. 8      einen Längsschnitt durch eine Variante einer Beeinflussungseinheit mit adaptiver Linsenwirkung,

Fig. 9      einen Längsschnitt durch eine Variante einer als Spiegel wirkenden Beeinflussungseinheit mit adaptiver Linsenwirkung,

Fig. 10      eine schematische Darstellung einer Anordnung mit einer Beeinflussungseinheit zur Veränderung einer Wellenfront eines optischen Strahls,

Fig. 11      eine schematische Darstellung einer Anordnung zur Überprüfung einer mit einer Beeinflussungseinheit veränderten Wellenfront eines einfallenden Strahls und Korrektur, falls die veränderte Wellenfront nicht der Vorgabe entspricht und

Fig. 12      eine schematische Darstellung einer Anordnung eines "custom-mode"-Resonators mit einem thermo-optisch adaptiven Resonatorspiegel.

## Wege zur Ausführung der Erfindung

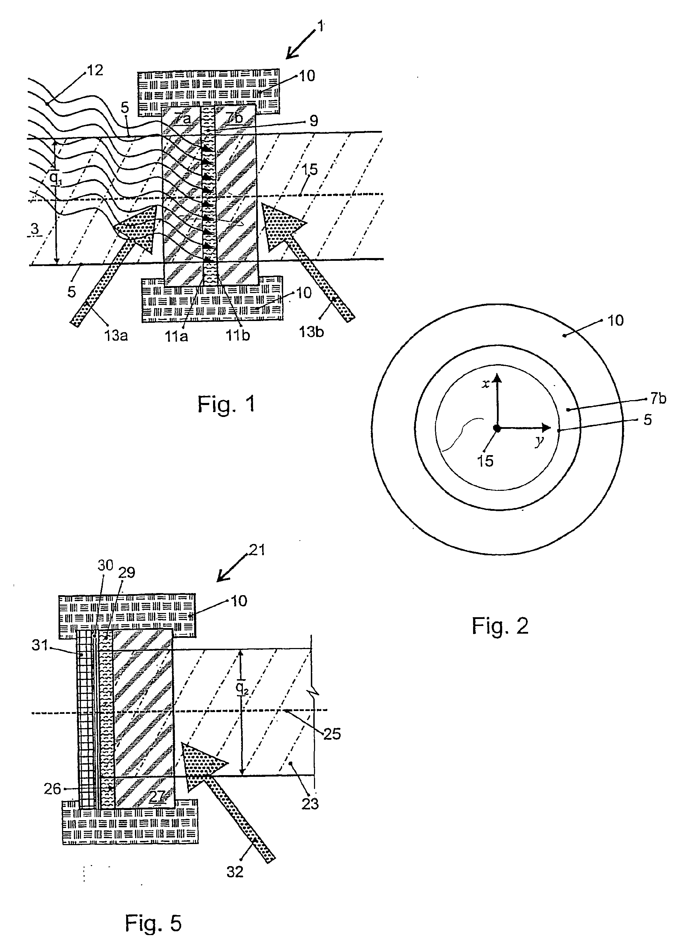

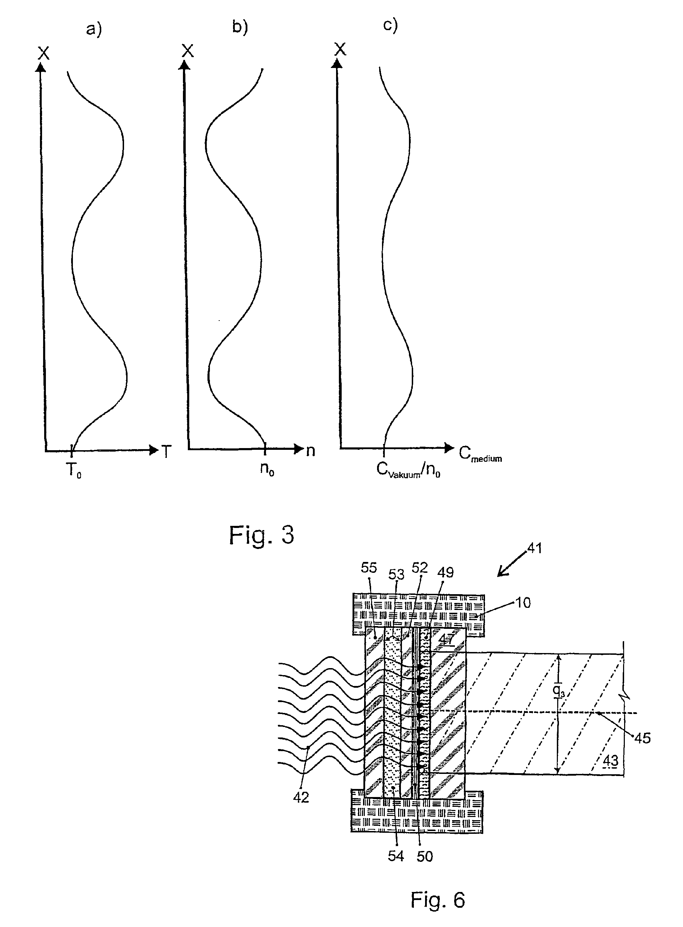

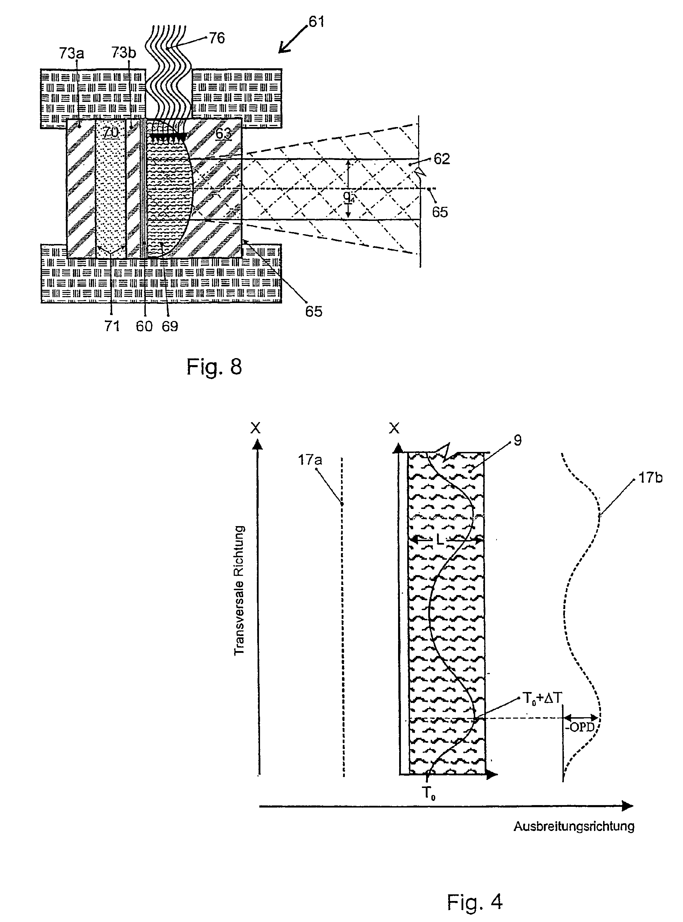

Eine Ausführungsform einer erfindungsgemässen Beeinflussungseinheit **1** zur Veränderung einer Wellenfront eines optischen Strahls **3** ist in **Figur 1** dargestellt. Eine physikalische Erklärung zur Veränderung der Wellenfront wird unten anhand der **Figuren 3a-c** und **4** erläutert. Die Beeinflussungseinheit **1** liegt im Strahlengang des optischen Strahls **3** und soll den Strahlquerschnitt $q_1$ des optischen Strahls **3** annähernd vollständig aufnehmen. Die Begrenzungslinien **5** des Strahls **3** in **Figur 1** kennzeichnen einen Intensitätswert des Strahls **3,** bei dem seine maximale Intensität auf den e-ten Teil abgesunken ist. Die Beeinflussungseinheit **1** hat wenigstens eine flächig kühlende Kühlplatte; hier sind zwei Kühlplatten **7a** und **7b** vorhanden. Ausführungsbeispiele mit nur einer Kühlplatte sind unten beschrieben. Die Kühlplatten **7a** und **7b** liegen quer zur optischen Achse **15** des Strahls **3**. Die querliegenden und zueinander parallelen Kühlplatten **7a** und **7b** sind in **Figur 1** senkrecht zur optischen Achse **15** liegend gezeichnet. Selbstverständlich können auch andere Winkel verwendet werden, wodurch sich allerdings eine Strahlversetzung des transmittierten Strahls **3** und eine Verzerrung der Wellenfrontänderung gegenüber dem eingebrachten Wärmemuster ergibt. Eine vom senkrechten Winkel abweichende Anordnung wird man immer dann wählen, wenn eine "Verzerrung" der zu erzeugenden Wellenfront gegenüber dem Wärmemuster gewünscht wird. Eine derartige "Verzerrung' kann beim Einsatz von Anamorphoten von Vorteil sein. Die Beeinflussungseinheit **1 hat** eine mit einem Wärmemuster belegbare, auf einer Oberseite der wenigstens einen Kühlplatte, hier auf den beiden Oberseiten **11** a und **11b** der beiden Kühlplatten **7a** und **7b,** im innigen Kontakt mit ihren Grundflächen liegende Schicht **9** als flächige Modulationsschicht.

Die das Material der Schicht **9** einschliessendeh Kühlplaten **7a** und **7b** sind in einer ringförmigen Halterung **10** eingelegt. Die Halterung kann entgegen der Darstellung in **Figur 1** zweiteilig mit ebenfalls nicht dargestellten, die Dicke der Schicht **9** bestimmenden Innenanschlägen für die Kühlplatten **7a** und **7b** ausgebildet sein. Das Material der Halterung **10** kann beliebig gewählt werden; vorzugsweise wird man jedoch ein Metall verwenden. Zwischen den nicht dargestellten Innenanschlägen kann eine Einfüllöffnung für das Fluid oder Gel mit einer ebenfalls nicht dargestellten Entlüftungs-und/oder Druckausgleichsöffnung vorgesehen werden.

Das Material der Schicht **9** ist ein Fluid oder ein Gel, welches weiter unten spezifiziert wird. Da in dem hier beschriebenen Ausführungsbeispiel zwei Kühlplatten **7a** und **7b** vorhanden sind, liegt die Schicht **9** mit ihren Grundflächen an den beiden Oberseiten **11a** und **11b** der beiden Kühlplatten **7a** und **7b** an. Ein Wärmemuster wird in der Schicht **9** mit einer in der **Figur 1** von der linken Seite durch die Kühlplatte **7a** hindurch dringenden Heizstrahlung **12** erzeugt. Die Dicke der Schicht **9** ist derart dünn gewählt, dass eine flächige Wärmeausbreitung in ihr vernachlässigbar ist, was zudem durch die flächige Kühlung über die Grundflächen mit einer vorgegebenen konstanten Temperatur $T_0$ erreicht wird. Diese Nivellierung unterbindet zusätzlich einen transversalen Wärmefluss in der Schicht **9.** Die Schichtdicke ist jedoch derart dick gewählt, dass die Wellenfront des einfallenden Strahls **3** ausgehend von einer thermischen Beaufschlagung der Schicht **9** durch das Wärmemuster veränderbar ist. Die Kühlplatten **7a** und **7b** sind transparent und ohne nennenswerte Absorption für die das Wärmemuster erzeugende Heizstrahlung **12** und den optischen Strahl **3**; auch ist das Material der Schicht **9** transparent für die Wellenlänge des Strahls 3. Als Material für die Kühlplatten 7a und 7b kann z.B. Glas, Quarz, Saphir etc. verwendet werden. Die Aussenseite der Kühlplatten 7a und 7b werden mit einem Luftstrom 13a und 13b auf einer konstanten Temperatur gehalten. Vorzugsweise wird man die Aussenseiten der Kühlplatten 7a und 7b für die Wellenlänge des Strahls 3 entspiegeln.

Das Kernstück der Beeinflussungseinheit 1 als thermo-optisch adaptiver Wellenfrontmodulator ist die dünne Schicht 9 aus einem thermo-optisch aktiven Material mit hoher thermischer Dispersion (Flüssigkeit, Gel, Curing-Gel), Als thermo-optisch aktive Materialien der Schicht 9 eignen sich insbesondere Materialien mit hoher Viskosität (vorzugsweise höher als 100 cP), Öle, Gele und Curing-Gele. Gute Ergebnisse wurden mit F-IMF105 (Newport), OCF-446 (von Nye), GC431A (Nye), OCK-433 (Nye) und Sylgard 184 (von Dow Coming Corp.) erreicht Die genaue Schichtdicke wird je nach Anwendung experimentell bestimmt. Das Material wird zwischen zwei transparenten Scheiben, hier den Kühlplatten 7a und 7b aus z.B. Glas, Saphir,... eingeklemmt. Die Scheiben 7a und 7b dienen einerseits als Halterung, andererseits auch zur Kühlung des Schichtmaterials. Das thermo-optisch aktive Material wird mittels einer Heizstrahlung 12, z.B. ausgehend von einer in Figur 1 nicht gezeigten Lichtquelle (Laser), welche eine Hefzstrahlung 12 mit einer Wellenlänge A aussendet, lokal entsprechend dem vorgegebenen Wärmemuster aufgeheizt. Das Material muss daher die Wellenlänge A absorbieren. Die durch die Absorption der Heizstrahlung erzeugte Wärme im Material wird durch die innig anliegenden als Scheiben 7a und 7b aus Glas (bzw. Saphir) ausgebildeten Kühlplatten zu deren als Wärmesenke wirkenden Oberseiten 11a und 11b abgeführt. Die Aussenseiten.otffl4 können, wie in Figur 1 angedeutet, falls nötig, zusätzlich durch einen Luftstrom 13a und 13b aktiv gekühlt werden. Durch die geringe Dicke der Schicht 9 und die Wirkung der Kühlplatten 7a und 7b auf die Grundflächen wird eine Ausbreitung der Wärme in eine nicht gewünschte zur Strahlachse 15 transversale Richtung unterbunden. Die lokale unterschiedliche Erwärmung entsprechend dem vorgegebenen Wärmemuster ergibt aufgrund der thermischen Dispersion ein entsprechendes flächiges Brechungsindexmuster, welches ein vorgegebenes flächiges Lichtgeschwindig-keitsmuster erzeugt. Das flächig, räumlich durch das Brechungsindexmuster zu modulierende Licht (Strahlung) mit der Wellenlänge B, welche sich von der Wellenlänge A unterscheidet) sollte im Material der Fluid- oder Gelschicht 9 nicht absorbiert werden.

Wie bereits oben angedeutet, wird die Wellenfront des Strahles 3 mit einer thermischen Beaufschlagung durch ein flächiges d.h. zweidimensionales Wärmemuster, welches mit einer entsprechenden Heizstrahlung 12 eingebracht wird, hervorgerufen; die Beeinflussungseinheit kann somit als thermo-optischer Wellenfrontmodulator bezeichnet werden. Beim thermo-optischen Wellenfrontmodulator wird die thermische Dispersion dn/dT und/oder die thermische Expansion dL/dT der Fluid- oder Gelschicht ausgenützt.

Die Wirkung der thermischen Dispersion wird als Erstes nachfolgend erklärt.

Der Brechungsindex n eines Materials, hier derjenige der Fluid- oder Gelschicht, variiert mit der Temperatur T. In erster Näherung lässt sich dieser beschreiben als

$$n(T) = n_0 + \frac{dn}{dT} \cdot \Delta T \qquad (1)$$

wobei $\Delta T = T - T_0$ eine Temperaturdifferenz zwischen einer Normaltemperatur $T_0$ und einer örtlichen, durch das Wärmemuster an einem vorgegebenen Ort erzeugten Temperatur T ist, und $n_0$ der Brechungsindex bei der Normaltemperatur $T_0$. Da die Lichtgeschwindigkeit $C_{Medium}$ in einem Medium direkt von dessen Brechungsindex n abhängig ist, ist diese aufgrund der thermischen Dispersion dn/dT auch von der Temperatur T abhängig:

$$C_{Medium}(T) = \frac{C_{Vakuum}}{n(T)} \qquad (2)$$

Diese Temperaturabhängigkeit der Lichtgeschwindigkeit $C_{Medium}$ in einem Medium kann nun ausgenutzt werden, um die Wellenfront eines Lichtstrahls, hier des Lichtstrahls 3, in transversaler Richtung thermo-optisch zu modulieren. Der prinzipielle Aufbau und der Zusammenhang zwischen einer Temperatur T, einem Brechungsindex n und der betreffenden Lichtgeschwindigkeit ist in den Figuren 3a bis 3c dargestellt. Eine relativ dünne Schicht 9 im Millimeterbereich eines Materials (Fluid oder Gel) mit thermischer Dispersion wird durch die Heizstrahlung 12 entsprechend dem vorgegebenen Wärmemuster örtlich inhomogen aufgeheizt. Eine beispielsweise Temperaturverteilung in der Fluid- oder Gelschicht 9 ist in Figur 3a dargestellt. Es ist hier lediglich der Temperaturverlauf in der in Figur 2 gezeigten x-Richtung aufgetragen. x ist die Koordinate eines karthesischen Koordinatensystems x-y, welches seinen Ursprung auf der Achse 15 des Strahls 3 hat. Infolge der unterschiedlichen, dem Wärmemuster entsprechenden, Lichtgeschwindigkeiten $C_{Medium}$ wird eine einfallende, ebene Wellenfront 17a des Strahles 3, wie in Figur 4 dargestellt, beim Durchlaufen der Schicht 9 parallel zur Achse 15 des Strahles 3 nach vorne oder nach hinten verschoben, d.h. deformiert. Aus der ebenen Wellenfront 17a ist die in Figur 4 gezeigte beeinflusste Wellenfront 17b geworden. Der Wellenfrontmodulator kann in umgekehrter Richtung auch eine "verbogene" Wellenfront wieder "gerade biegen".

Die Deformation einer ebenen Wellenfront, hier der Wellenfront 17,vor und hinter der Schicht 9 lässt sich als optischer Weglängenunterschied OPD (engl. Optical Path Difference) gegenüber einem Normalwert (gleiche flächige Dicke $L_0$ und Temperatur $T_0$) beschreiben. Der Weglängenunterschied ist für den Durchgang durch die Schicht mit der Dicke L proportional zur Temperaturdifferenz und Schichtdicke.

$$OPD(x,y) = [n(x,y) - n_0] \cdot L = \frac{dn}{dT} \cdot \Delta T(x,y) \cdot L(x,y) \qquad (3)$$

Flüssigkeiten bzw. Gele, insbesondere Curing-Gele, weisen eine thermische Dispersion in der Grössenordnung von etwa $- 3 \cdot 10^{-4}/°C$ auf. Zum Vergleich: Wasser hätte eine thermische Dispersion dn/dT von $- 1,0 \cdot 10^{-4} /°C$. Hierdurch ergibt sich bei der Transmission des Strahles 3 durch eine mit einem Wärmemuster belegte, d.h. geheizte Schicht, hier beispielsweise die Schicht 9, ein optischer Weglängenunterschied von $- 0.3 \, \mu m$ pro °C Temperaturdifferenz und Millimeter Schichtdicke. Entsprechend dem auf die Fluid- oder Gelschicht aufgeprägten Wärmemuster wird ein Weglängenmuster bzw. bezogen auf einen Normalwert ein Weglängenunterschiedsmuster OPD(x, y) erhalten.

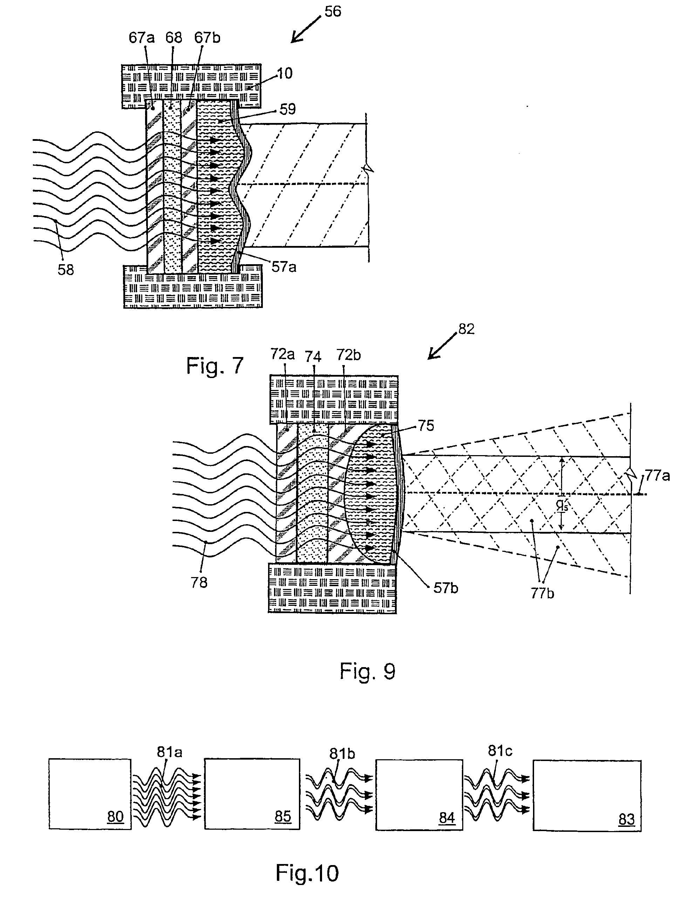

Die thermische Dispersion dn/dT zur Veränderung einer Wellenfront wird neben der in den Figuren 1 und 2 dargestellten Beeinflussungseinheit 1 auch in den in den Figuren 5, 6 und 8 dargestellten Beeinflussungseinheiten 21, 41 und 61 verwendet.

Neben dem oben verwendeten Effekt der thermischen Dispersion dn/dT kann bei Beeinflussungseinheiten auch die thermische Expansion eines Materials ausgenützt werden. Materialien dehnen sich mit zunehmender Temperatur aus. Der Längenunterschied $\Delta L$ ist proportional zum Temperaturunterschied AT und zur Länge L des Materials (hier der Dicke der Fluid- oder Gelschicht):

$$\Delta L = \alpha \cdot L \cdot \Delta T \qquad (4)$$

wobei $\alpha$ der Ausdehnungskoeffizient ist. Wird in einer Materialschicht eine inhomogene Temperaturverteilung erzeugt, so dehnt sich das Material unterschiedlich aus. Dies kann auf zweierlei Art und Weise ausgenutzt werden. Einerseits wird die Oberfläche der Schicht durch die Temperaturverteilung unterschiedlich verformt, Wird nun auf diese Oberfläche eine der Verformung folgende Begrenzungsschicht beispielsweise als Schichtbelag aufgebracht so fesultiert daraus eine Beeinflussungseinheit mit einem adaptiv deformierbaren Bereich. Vorzugsweise wird man die Begrenzungsschicht reflektierend (adaptiv deformierbarer Spiegel) ausbilden; sie kann aber auch eine transparente Folie sein.

Bei einem adaptiv deformierbaren Spiegel beträgt der optische Weglängenunterschied OPD für einen einfallenden und dann reflektierten Strahl:

$$OPD(x,y) \simeq -2 \cdot \Delta L(x,y) \qquad (5)$$

OPD ist in **Figur 4** eingezeichnet Der Faktor **2** rührt von der Reflexion am Spiegel her. Da eine Ausdehnung den optischen Weg verkürzt, ist dieser Wert negativ.

Wenn das Licht durch die Fluid- bzw. Gelschicht transmittiert, wird zudem durch die Ausdehnung des Materials der optische Weg im Material aufgrund des höheren Brechungsindexes verlängert Die Ausdehnung $\Delta L$ (x,y) bewirkt

dabei einen optischen Weglängenunterschied OPD (im Vergleich zur Luft) von:

$$OPD(x,y) = (n_{Material}(x,y) - n_{Luft}) \cdot \Delta L(x,y) \qquad (6)$$

Da der Lichtstrahl das Material (Fluid oder Gel) durchläuft, kommt hier zusätzlich noch der Effekt der thermischen Dispersion zum Tragen. Daher handelt es sich in diesem Fall um eine Ausnutzung beider thermischer Effekte. (Wobei bei negativer thermischer Dispersion sich Effekte gegenseitig auch aufheben können.) Insgesamt resultiert formell ein optischer Weglängenunterschied bei einem einfach Durchgang von:

$$OPD(x,y) = (n_0 + \frac{dn}{dT} \cdot \Delta T(x,y) - n_{Luft}) \cdot \Delta L(x,y) + \frac{dn}{dT} \cdot \Delta T(x,y) \cdot L \qquad (7)$$

Eine weitere Beeinflussungseinheit **56** als Ausführungsvariante zu der in **Figur 6** gezeigten Beeinflussungseinheit **41,** wobei jedoch die oben aufgeführte thermische Expansion ausgenützt wird, ist in **Figur 7** dargestellt. Gegenüber der Ausführung in **Figur 6** ist hier die eine Seite der die Fluid oder Gelschicht **59** bedeckenden Platte **47** sowie auch der Spiegelbelag **50** auf der anderen Seite der Fluid- oder Gelschicht **59** entfernt. Eine spiegelnde Schicht **57** ist in **Figur 7** als äussere Schicht auf der Fluid-oder Gelschicht **59** angeordnet.

Unter Umständen kann das thermo-optisch aktive Material (Fluid oder Gel) an der Oberfläche direkt verspiegelt sein. Ansonsten wird der Spiegel aus einer dünnen Glas-oder Kristallschicht oder einer Folie wie z.B. Mylar oder Metallfolie bestehen.

Ein Vorteil eines Spiegels gegenüber einem transmittierenden Wellenfrontmodulator ist, dass die Rückseite der Beeinflussungseinheit frei bleibt. Dies ermöglicht verschiedene Arten die thermo-optisch aktive Schicht aufzuheizen:

1. Die thermo-optisch aktive Schicht wird optisch (mit einem Laser) aufgeheizt. Dabei muss das Material diese Heizstrahlung absorbieren.

2. Eine (dünne) Absorptionsschicht wird hinter dem thermo-optisch aktiven Material angebracht. Diese Schicht wird lokal mittels eines Lasers aufgeheizt. Das Material wird durch Wärmeleitung erwärmt.

3. Hinter dem thermo-optisch aktiven Material wird eine Heizschicht angebracht, welche mittels elektrischer Widerstände die aktive Schicht lokal erwärmt.

Wird nun ein Wärmemuster mit einer Heizstrahlung **58** von der Rückseite eingestrahlt, so erfolgt eine "Verbiegung" der Spiegelschicht **57** entsprechend dem eingestrahlten Wärmemuster. Die Fluid- oder Gelschicht **59** muss bei dieser Ausführungsvariante nicht mehr transparent für die einfallende optische Strahlung sein. Die beiden analog zu den Platten **52** und **55** ausgebildeten Platten **67a** und **67b,** welche ein Kühlfluid **68** (z.B. Wasser) einschliessen, sollen derart ausgebildet sein, dass sie die Heizstrahlung **58** nur in geringem Umfang absorbieren.

Als Beeinflussungseinheit zur Veränderung einer Wellenfront eines optischen Strahls, hier mit **23** gekennzeichnet, kann auch ein in **Figur 5** dargestellter thermo-optisch-adaptiver Spiegel **21** dienen. Da die Beeinflussungseinheit **21** als Spiegel wirkt, kann sie nun derart angeordnet werden, dass der Strahl **23** unter einem Winkel reflektiert oder in sich selbst zurück reflektiert wird, wie in **Figur 5** dargestellt ist. Auch hier wird der Strahlquerschnitt $q_2$ des optischen Strahls **23** annähernd vollständig von der spiegelartige Beeinflussungseinheit **21** aufgenommen. Auch die spiegelartige Beeinflussungseinheit **21** hat eine Fluid- oder Gelschicht **29,** welche quer zur optischen Achse **25** des einstrahlbaren Strahls **23** derart angeordnet ist, dass sie den Strahlquerschnitt $q_2$ des Strahls **23** annähernd vollständig aufnehmen kann. Die spiegelartigen Beeinflussungseinheit **21** hat lediglich eine einzige flächig kühlende Kühlplatte **27,** welche analog zu den Kühlplatten **7a** und **7b** ausgebildet ist, auf deren einer Oberseite **26** im innigen Kontakt eine Grundfläche der Fluid- oder Gelschicht **29** angeordnet ist. Auch hier ist die Fluid- oder Gelschicht mit einem Wärmemuster belegbar. Die Fluid-oder Gelschicht **29** hat eine Schichtdicke, die einerseits derart dünn gewählt ist, dass eine flächige Wärmeausbreitung unter Mithilfe der Kühlplatte **27** vernachlässigbar ist, und andererseits derart dick gewählt ist, dass die Wellenfront des einfallenden Strahls **23** ausgehend von einer thermischen Beaufschlagung des Fluids bzw. Gels **29** durch das Wärmemuster veränderbar ist. Unmittelbar auf der der Kühlplatte **27** gegenüberliegenden Seite der Fluid-oder Gelschicht **29** ist ein Spiegelbelag **30** angeordnet, der den einfallenden Strahl **23** mit einem vorgegebenen Reflexionsfaktor reflektiert. In der Regel wird man eine möglichst vollständige Reflexion anstreben. Es können aber auch Reflexionswerte unter annähernd 100% gewählt werden, wenn gleichzeitig eine Dämpfung des Strahles **23** gewünscht wird. Auf den Spiegelbelag nach aussen folgt eine Heizschicht **31**. Die Heizschicht **31** kann nun eine Heizscheibe mit örtlich ansteuerbaren Heizelementen zur Erzeugung des Wärmemusters sein. Die Heizschicht kann jedoch auch lediglich als absorbierende Fläche ausgebildet sein, auf die eine Heizstrahlung mit dem entsprechenden Wärmemuster trifft. Die Kühlplatte **27** wird aktiv durch einen Luftstrom **32** gekühlt, d.h. auf einer vorgegebenen Temperatur $T_0$ gehalten. Bei diesem Aufbau durchläuft der zu "modulierende" Lichtstrahl **23** zweimal die Fluid- oder Gelschicht **29**.

Ein Spiegel kann auch durch Auftragen eines spiegelnden Belages an der angrenzenden Oberfläche des benachbarten Elements, also hier z. B. auf der Heizschicht **31** erfolgen.

Vorteil der in **Figur 5** gezeigten Beeinflussungseinheit ist, dass die Wirkung der thermischen Dispersion sich verdoppelt, da die Fluid- oder Gelschicht zweimal durchlaufen wird.

Eine Ausführungsvariante eines thermo-optisch adaptiven Spiegels **41** als Beeinflussungseinheit ist in **Figur 6** dargestellt. Auch hier soll die Beeinflussungseinheit **41** den optischen Strahl **43** mit einem Strahldurchmesser von $q_3$ annähernd vollständig aufnehmen. Die Beeinflussungseinheit **41** hat analog zur Beeinflussungseinheit **21** in gleicher Anordnung eine erste Kühlplatte **47,** welche für die optische Strahlung **43** transparent ist und eine Fluid- oder Gelschicht **49** nach aussen abtrennt. Auf der der Kühlplatte **47** gegenüberliegenden Seite der Fluid- oder Gelschicht **49** ist ein Spiegelbelag **50** angeordnet. Ein einfallender, zu "modulierender" Strahl **43** mit einer Strahlachse **45** wird analog zum Strahl **23** geführt. Auf dem Spiegelbelag **50,** an dessen der Schicht **49** abgewandten Seite, liegt eine für die das Wärmemuster übertragenden Heizstrahlung **42** weitgehend transparente weitere Kühlplatte **52,** gefolgt von einem Hohlraum **53** für ein Kühlmittel **54** (z.B. Wasser) und eine das Kühlmittel **54** nach aussen abdichtende weitere Platte **55**. Anschlüsse für das Kühlmittel **54** sind nicht dargestellt. Der Spiegelbelag **50** stellt für die Transmission der Wärmestrahlung kein wesentliches Hindernis dar. Es könnte aber auch die Erwärmung der Fluid- oder Gelschicht **49** über den Spiegelbelag **50** erfolgen. Da der Spiegelbelag **50** dünn ist, kann eine Wärmeleitung in transversaler Richtung vernachlässigt werden.

In den oben beschriebenen und in den **Figuren 1, 5** und **6** dargestellten Beeinflussungseinheiten **1, 21** und **41** ist die Fluid- oder Gelschicht **9, 29** oder **49,** welche durch seitliche (vordere und hintere) Begrenzungselemente, denen auch die Kühlplatten **7a/b, 27** und **47** zuzurechnen sind, begrenzt ist, mit annähernd gleicher Schichtdicke ausgebildet. Bei der in **Figur 8** dargestellten, ebenfalls einen Spiegelbelag **60** aufweisenden Beeinflussungseinheit **61** ist nun die Fluid- oder Gelschicht durch eine, hier durch eine für den zu beeinflussenden Strahl **62** transparente Abdeckplatte **63,** in eine vorgegebene Form **69** gebracht. In **Figur 8** sind die Dickenverhältnisse der Form **69** übertrieben dargestellt. Die grösste Dicke (in der Mitte) liegt bei etwa 0,5 bis 4 Millimeter bei einem Durchmesser der Form **69** typischerweise von 0,5 bis 3 Zentimetern. [In der Fasertechnik (z.B. Nachrichtenübertragung) können selbstverständlich geringere Abmessungen sich ergeben. Auch hier soll die Beeinflussungseinheit **61** den Strahlradius $q_4$ annähernd vollständig aufnehmen. Die Abdeckplatte **63** hat hier eine zur Strahlachse **65** senkrecht verlaufende Aussenseite **65** und eine die Fluid- oder Gelschicht **69** formende Innenseite **66**. Die Aussen- und Innenseiten können selbstverständlich anders geformt sein. Die Anordnung einer aktiven Kühlung z.B. mit einem fliessenden Fluid **70** ist analog zu derjenigen der Beeinflussungseinheit **41** ebenfalls mit zwei einen Hohlraum **71** für das Kühlfluid **70** einschliessenden Platten **73a** und **73b** ausgebildet. Platte **73b** dient insbesondere als Kühlplatte; in geringem Masse auch die Abdeckplatte **63.** Der Strahl **62** wird am Spiegelbelag **60** reflektiert. Die Beeinflussungseinheit zeigt bei aufgeprägtem Wärmemuster eine Linsenwirkung. Eine Heizstrahlung **76** wird jetzt annähernd senkrecht zur Strahlachse **65** eingestrahlt. Die Beeinflussungseinheit **61** wirkt als thermisch-optisch-adaptive Linse. Bei der Bestimmung der mechanischen Abmessungen der Beeinflussungseinheit **61** ist darauf zu achten, dass der eintretende Strahlquerschnitt $q_4$ sich vom austretenden unterscheidet, da die gesamte Anordnung als optische Zerstreuungslinse wirken kann.

Während gewöhnliche Linsen durch eine unveränderliche, vorgegebene Brechkraft charakterisiert werden, lässt sich die Brechkraft einer adaptiven Linse variieren. Eine solche adaptive Linse lässt sich beispielsweise zur Kompensation der thermisch induzierten Linse in Laserstäben einsetzen. Die Schichtdicke der thermo-optisch-adaptiven Schicht **69** (Linsenform) variiert in zur Strahlachse **65** transyersaler Richtung. Die absorbierte Leistung der Heizstrahlung **76** in einer transversalen Position (x,y), wobei der Ursprung des Koordinatensystems auf der Strahlachse liegt und x und y senkrecht hierzu verlaufen, ist proportional zur Schichtdicke der Fluid- oder Gelschicht **69.** Der thermische Widerstand (gemessen parallel zur Strahlachse **65)** an der dickeren Stelle des Fluids bzw. Gels ist zudem erhöht. Beide Effekte zusammen führen dazu, dass die Temperatur in der Schicht **69** und damit auch die optische Pfadlänge für den einfallenden sowie reflektierten Strahl sich in zur optischen Achse transversalen Richtung ändert. Bei geeigneter Wahl einer vorgegebenen Form der Schicht **69** kann durch die durch die absorbierte Heizstrahlung **76** aufgeprägte thermische Dispersion **dn/dT** ein für den Strahl **62** parabolisch erscheinender Verlauf der Innenseite **66** erreicht werden. Somit kann durch homogene Einstrahlung eine Linsenwirkung erzielt werden, deren Brechkraft direkt von der eingestrahlten Heizleistung abhängt.

Werden die Abdeckplatte **63** und das Fluid bzw. das Gel derart ausgewählt, dass sie ohne Einstrahlung der Heizstrahlung **76** den gleichen Brechungsindex haben, so wirkt die Beeinflussungseinheit Im Ruhezustand (ohne Heizleistung) als einfacher Spiegel.

In **Figur 7** ist eine ebene spiegelnde Schicht **57a** dargestellt, die durch das eingeprägte Wärmemuster beliebig verformbar ist. **Figur 9** zeigt hierzu eine Ausführungsvariante einer Beeinflussungseinheit **82** mit einer Spiegelschicht **57b.** Auch hier sind analog zu den beiden Platten **67a** und **67b** zwei Platten **72a** und **72b** vorhanden, die ein Kühlfluid **74** analog zum Kühlfluid **68** einschliessen. In Gegensatz zur Platte **67b** hat hier die als Kühlplatte wirkende Platte **72b** benachbart zur Fluid- oder Gelschicht **75** als Modulationsschicht eine von einer planen Ebene abweichende Oberflächenkontur **57b.** Auch hier ist analog zur **Figur 8** die Oberflächenkrümmung übertrieben dargestellt. Im Bereich der auftreffenden Strahlachse **77a** eines einfallenden und reflektierten optischen Strahls **77b** ist die Schicht lediglich etwa einen Millimeter dick. Der einfallende Strahl hat den Strahlquerschnitt $q_5$. Die Spiegelschicht **57b** ist analog zur Anordnung in **Figur 7** auf der Fluid- oder Gelschicht **75** angeordnet. Im Ruhezustand ist diese Spiegelschicht **57b** in **Figur 9** eine ebene Fläche [muss es aber nicht sein; es kann auch ein anderes Oberflächenruheprofil (bereits schon ohne eingeprägtes Wärmemuster) vorgegeben werden]. Wird hier mit einer über den Strahlquerschnitt konstanten Heizintensität der Heizstrahlung **78** eingestrahlt, so ergibt sich die in **Figur 9** gezeigte Verkrümmung. In **Figur 9** trifft die Heizstrahlung **78** longitudinal auf; sie kann aber auch, wie in **Figur 8** dargestellt, transversal geführt werden. **Figur 9** zeigt den Zustand bei einem eingeprägten Wärmemuster mit über dem Strahlquerschnitt der Heizstrahlung **78** konstanter Heizleistung. Der Heizstrahlung **78** kann selbstverständlich auch eine andere flächige Heizleistungsverteilung vorgegeben werden.

Für eine Beeinflussungseinheit ist die Erzeugung einer transversal möglichst hoch aufgelösten, flächigen Temperaturverteilung **T(x,y)** nötig. Die Erfindung befasst sich mit einer Erzeugung einer gezielt steuerbaren (adaptiv) transversalen Temperaturverteilung bzw. einer transversal modulierten optischen Weglängendifferenz. Um eine gezielte Temperaturverteilung zu erhalten, muss das Augenmerk auf die geometrische Anordnung der Wärmequelle und der Wärmesenke gerichtet werden.

Die Temperatur an einer Stelle mit den Koordinaten x und y in der thermo-optisch aktiven Schicht wird neben dem eingebrachten Wärmemuster durch die Umgebungstemperatur beeinflusst. Damit in transversaler Richtung, also über dem Querschnitt des einzustrahlenden Strahls **3, 23** und **43,** sowie bedingt auch beim Querschnitt des Strahls **62,** eine möglichst unabhängige Temperaturverteilung **T(x, y)** realisiert werden kann, muss der Wärmefluss möglichst nur in longitudinaler Richtung, also parallel zur Strahlachse **15, 25, 45** und **65** des einfallenden Strahls **3, 23, 43** und **62** erfolgen.

Durch flächiges Kühlen der dünnen thermo-optisch aktiven Schicht kann ein Wärmefluss in longitudinaler Richtung ohne nennenswerte Ausbreitung in transversaler Richtung generiert werden.

Um dies zu erreichen, muss das Kühlsystem der abzuführenden Wärmeleistung gerecht werden. Während bei einer geringen Heizleistung zur Erzeugung des Wärmemusters die an einer Kühlplatte entlang streichende Umgebungsluft unter Umständen ausreichen kann, muss bei höheren Heizleistungen aktiv gekühlt werden. Eine flächige Wasserkühlung oder flächige Luftkühlung können verwendet werden. Dabei muss das thermo-optisch aktive Material nicht in direktem Kontakt mit der Wärmesenke stehen. Eine weitere Schicht Glas, Quarz oder anders Material kann dazwischen liegen. Damit die resultierenden Temperaturen im thermo-optisch aktiven Material auf niedrigem Niveau gehalten werden können, und zudem ein Wärmefluss in transversaler Richtung unterbunden werden kann, sollte der Wärmewiderstand dieser Schicht entsprechend klein sein.

Als eine weitere Kühlmöglichkeit ist die Stabkühlung zu erwähnen. Hierbei befindet sich das thermo-optisch aktive Material im innigen Kontakt mit der Stirnfläche eines Stabes und ersteckt sich über diese Stirnfläche. Die Wärmesenke befindet sich dann an der Manteloberfläche am anderen Stabende. Obwohl in diesem Fall die Wärme am anderen Stabende in transversaler Richtung fliesst, erfolgt der Wärmefluss aus dem Material am ersten Stabende in longitudinaler Richtung. Nachteilig bei der Stabkühlung ist, dass die Temperatur im thermo-optisch aktiven Material aufgrund des Wärmewiderstandes des Stabes, welcher verhältnismässig lang sein muss, erhöht sein wird.

Lokale Temperaturerhöhungen zur Erzeugung eines Wärmemusters können mit verschiedenen Verfahren realisiert werden:

Ein selektives Aufheizen des thermo-optisch aktiven Materials kann durch lokale elektrische Heizelemente oder durch eine Absorption einer elektromagnetischen Strahlung erreicht werden. Beim "elektrischen" Heizen befindet sich die Wärmequelle nicht im thermo-optisch aktiven Material. Die Entstehung des Wärmemusters erfolgt durch eine lokale Wärmeübertragung ausgehend von einem Heizelement, welches auf der Oberfläche des thermo-optisch aktiven Materials anliegt. Bei der Absorption elektromagnetischer Strahlung wird das thermo-optisch aktive Material lokal direkt in der Schicht aufgeheizt.

Auch mit einer vorgegebenen lokalen Variation von Absorptionseigenschaften kann ein Wärmemuster auch bei einer homogenen Einstrahlung einer elektromagnetischen Strahlung erzeugt werden. Hierbei lassen sich auf eine einfache Art und Weise bereits mittels einfacher Heizquellen gewünschte Temperaturverteilungen (Wärmemuster) realisieren.

Es kann aber auch ein homogenes Heizen mit geeignet geformten Elementen vorgenommen werden, wobei unter geeignet geformt eine flächig unterschiedliche Schichtdicke verstanden wird. Da an unterschiedlichen Ortkoordinaten unterschiedliche Schichtdicken vorhanden sind, ergibt sich bei einem gleichmässigen Heizen eine gegenüber der geometrischen eine unterschiedliche optische Weglänge. Jedes Material, auch das thermo-optischen Material, hat einen thermischen Widerstand R. Der thermische Widerstand ist proportional zur Schichtdicke L des Materials und umgekehrt proportional zu dessen Wärmeleitfähigkeit k. Bei einem vorgegebenen thermo-optischen Material lässt sich der thermische Widerstand R daher durch die Ausgestaltung der Schichtdicke L beeinflussen. Andererseits wirkt sich der thermische Widerstand R auf den resultierenden Temperaturverlauf im thermo-optischen Material aus. Wird beispielsweise das thermo-optische Material lokal mit einer Heizleistung Q aufgeheizt, so hängt die resultierende Temperatur in der Schicht massgeblich vom Wärmewiderstand **R** ab. Wird nun die Schichtdicke **L** in transversaler Abhängigkeit **x, y** unterschiedlich gewählt, so lässt sich damit die resultierende Temperaturdifferenz $\Delta T(x, y)$ massgeschneidert beeinflussen.

Wie die Gleichungen (3) bis (7) zeigen, ist der optische Weglängenunterschied **OPD** neben der Temperaturdifferenz $\Delta T$ auch von der Schichtdicke **L** abhängig. Daher kann durch eine vorgegebene Variation der Schichtdicke **L** in transversaler Richtung der optische Weglängenunterschied **OPD** doppelt beeinflusst werden:

Wird eine thermo-optische Schicht unterschiedlich dick gewählt und das Material mittels eines homogenen Heizstrahls geheizt, so resultieren durch die vorgegebene Variation der Schichtdicke **L** eine vorgegebene transversale Temperaturverteilung und hierdurch entsprechende optische Weglängenunterschiede ($\rightarrow$ Wärmemuster).

Findet die Erwärmung der thermo-optisch aktiven Schicht mittels einer Heizstrahlung statt, so wird, wie in **Figur 10** schematisch dargestellt ist, hierzu mindestens eine externe Strahlungsquelle **80** benötigt. Diese erzeugt eine zur Herstellung des Wärmemusters in der Beeinflussungseinheit, hier mit **83** gekennzeichnet, nötige Heizstrahlung **81a.** Mit einer Einheit **85** wird der Heizstrahlung **81a** durch ein bildgebendes Verfahren eine geeignete Intensitätsverteilung aufgeprägt ($\rightarrow$ informationstragende Heizstrahlung **81b**). Als bildgebende Verfahren eignen sich beispielsweise mechanische Masken oder Flüssigkristalle, welche nur an vorgegebenen Orten vollständig, teilweise oder gar nicht strahlungsdurchlässig sind. Als bildgebende Verfahren können auch zeitlich gesteuerte Umlenkspiegel (sog. Galvanometerspiegel) verwendet werden. Die informationstragende Heizstrahlung **81b** wird anschliessend mit einer Abbildungsoptik **84** auf die aufzuheizende Stelle des Wellenfrontmodulators (Fluid- oder Gelschicht) abgebildet (fokussierte Heizstrahlung **81c**).

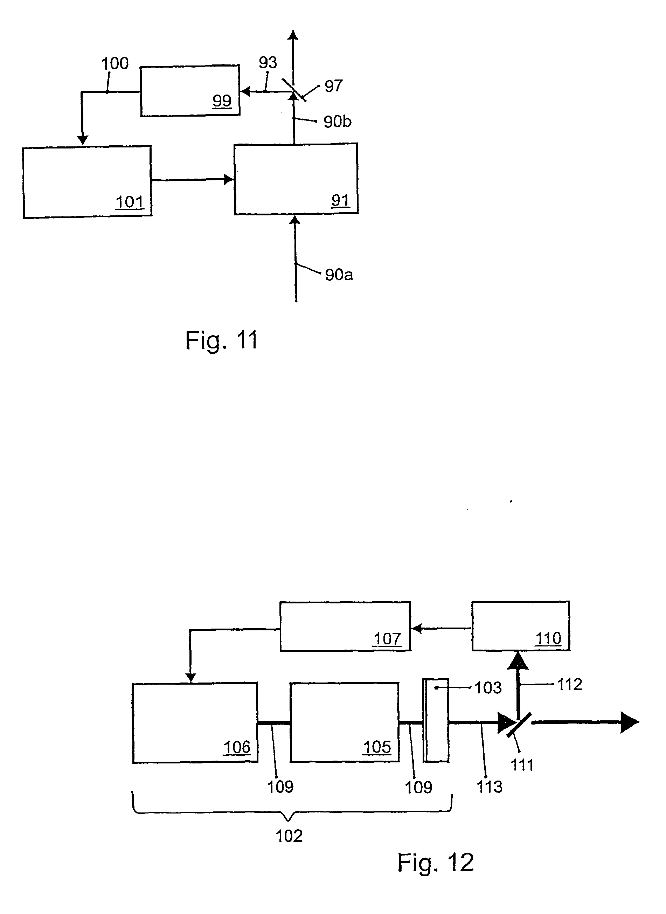

Mittels eines thermo-optisch adaptiven Spiegels bzw. eines Wellenfrontmodulators kann die Wellenfront eines Strahles, hier beispielsweise des Strahles **90a,** massgeschneidert beeinflusst werden. Zur Überprüfung und Nachregelung der Beeinflussung kann mit einer sogenannten "closed-loop" Anordnung, welche **Figur 11** zeigt, gearbeitet werden. Hierbei wird die einfallende Strahlung **90a** mit einer Beeinflussungseinheit **91** "moduliert". Zur Ermittlung der Wellenfront des aus der Beeinflussungseinheit **91** austretenden Strahls **90b** wird über einen physikalischen Strahlteiler **97** (und nicht einen geometrischen Strahlteiler) ein Teilstrahl **93** auf einen Strahldiagnosedetektor **99** geführt. Im Gegensatz zum geometrischen Strahlteiler verändert der physikalische Strahlteiler **97** nicht die relative Intensitätsverteilung über dem Strahlquerschnitt. Mit dem Strahldiagnosedetektor **99** ist vorzugsweise neben der Wellenfront auch das Strahlprofil des aus dem austretenden Strahl **90b** ausgekoppelten Teilstrahls **93** bestimmbar. Das Ausgangssignal **100** des Strahldiagnosedetektors **99** wird zu einer Einheit **101** geführt, die eine Einheit zur Erzeugung und entsprechenden Korrektur eines benötigten Wärmemusters hat. Die Einheit **101** wirkt dann entsprechend auf die Beeinflussungseinheit **91.** Falls die Wellenfront des ausfallenden Strahls **90b** vom vorgegebenen Resultat abweicht, können entsprechende Korrekturen vorgenommen werden, um den gewünschten Ausgangsstrahl **90b** zu erhalten. Der Strahldiagnosedetektor **99** kann einen bereits oben erwähnten Shack-Hartmann-Detektor enthalten.

Die Moden eines optischen Resonators **102,** der durch die Lage seines Auskoppelspiegels **103,** eines Verstärkers (z.B. Laserkristall) **105** und des anderen Resonatorspiegels **106** in **Figur 12** angedeutet ist, lassen sich mittels einer, wie oben beschriebenen, Beeinflussungseinheit, massgeschneidert beeinflussen. Insbesondere lassen sich unerwünschte Aberationen korrigieren und auch "custom modes" generieren. Anstelle eines herkömmlichen 100 %-Resonatorspiegels **106** ist dieser als thermo-optisch-adaptiver Spiegel **106** ausgebildet. Die auf den Spiegel **106** auftreffende und von diesem wieder reflektierte Wellenfront der Resonatorstrahlung **109** im Laserresonator **102** wird über ein mit einer Einheit **107** erzeugtes Wärmemuster derart eingestellt, dass etwaige Aberationen des Verstärkers **105** kompensiert werden und eine gewünschte transversale Intensitätsverteilung der Resonatorstrahlung **109** entsteht. Mit Hilfe einer Strahlprofilmessung mit einem Strahldiagnosedetektor **110,** auf den über einen physikalischen Strahlteiler **111** ein Teil **112** der Ausgangsstrahlung **113** gebracht wird, kann überprüft werden, ob das gewünschte Resultat erzielt worden ist. Falls nicht, wird das durch die Einheit **107** generierte Wärmemuster entsprechend modifiziert. Statt den 100%-Spiegel als Wellenfrontmodulator auszubilden, kann auch ein üblicher 100%-Resonatorspiegel verwendet werden und ein die Resonatorstrahlung transmittierender Wellenfrontmodulator als zusätzliches Element im Resonator angeordnet werden.

**Patentansprüche**

1. Verfahren zur Veränderung einer Wellenfront **(17)** eines optischen Strahls **(3; 23; 43; 90; 109)** mittels einer flächigen, quer zu einer optischen Achse **(15; 25; 45; 65)** des Strahls **(3; 23; 43; 90; 109)** angeordneten Modulationsschicht **(9; 29; 49; 69; 75),** welche derart angeordnet wird, dass ein Strahlquerschnitt $(q_1; q_2; q_3; q_4; q_5)$ des optischen Strahls **(3; 23; 43; 62; 77b; 90; 109)** annähernd vollständig aufgenommen wird, wobei die Modulationsschicht **(9; 29; 49; 69; 75)** örtlich mit einem Wärmemuster belegt wird, eine Schichtdicke der Modulationsschicht derart dünn gewählt wird und die Modulationsschicht **(9; 29; 49; 69; 75)** wenigstens auf einer ihrer beiden Grundflächen flächig so gekühlt wird, dass eine Wärmeausbreitung in der Modulationsschicht **((9; 29; 49; 69; 75)** quer zur optischen Achse **(15; 25; 45; 65; 77a)** vernachlässigbar klein ist, und die Schichtdicke derart dick und das Wärmemuster so gewählt werden, dass die Wellenfront **(17a)** des einfallenden Strahls **(3; 23; 43; 62; 90; 109)** ausgehend von einer thermischen Beaufschlagung der Modulationsschicht **(9; 29; 49; 69; 75)** durch das Wärmemuster veränderbar ist **dadurch gekennzeichnet, dass** zur Aufprägung des Wärmemusters eine separate Wärmequelle, die nicht der optische Strahl ist, verwendet wird.

2. Anordnung **{80, 85, 84, (1; 41; 56; 61; 82; 83; 91; 106)}** zur Durchführung des Verfahrens nach Anspruch 1 zur Veränderung einer Wellenfront **(17)** eines eine optische Achse **(15; 25; 45; 65; 77a)** aufweisenden optischen Strahls **(3; 23; 43; 62; 77b; 90; 109)** mit einer in dessen Strahlengang einbringbaren Beeinflussungseinheit **(1; 21; 41; 56; 61; 82; 83; 91; 106)** mit einer eine flächige, wenigstens eine Grundfläche **(11a, 11b)** aufweisenden Modulationsschicht **(9; 29; 49; 69; 75),** welche eine flächige Ausdehnung hat, die gross genug ist, damit ein Strahlquerschnitt **(q$_1$; q$_2$; q$_3$; q$_4$; q$_5$)** des optischen Strahls **(3; 23; 43; 62; 77b; 90; 109)** annähernd vollständig aufnehmbar ist, und mit einer Wärmequelle **(12; 31; 42; 76; 80; 101; 107),** mit der in der Beeinflussungseinheit **(1; 21; 41; 56; 61; 82; 83; 91; 106)** ein Wärmemuster erzeugbar ist, wobei die Beeinflussungseinheit **(1; 21; 41; 56; 61; 82; 83; 91; 106)** wenigstens eine quer zur optischen Achse **(15; 25; 45; 65)** verlaufende, flächige Kühlplatte **(7a, 7b; 27; 52; 72b; 73b)** hat, wobei die Grundfläche **(11a, 11 b)** der Modulationsschicht **(9; 29; 49; 69, 75)** mit der wenigstens einen Kühlplatte **(7a, 7b; 27; 52; 72b; 73b)** kühlbar ist, die Modulationsschicht **(9; 29; 49; 69; 75)** zur wenigstens teilweisen Absorption der Wärme der Wärmequelle ausgebildet ist und die Schichtdicke der Modulationsschicht **(9; 29; 49; 69; 75)** derart klein ausgebildet ist, dass zusammen mit der flächigen Kühlung durch die Kühlplatte **(7a, 7b; 27; 52; 72b; 73b)** lediglich ein vernachlässigbar kleiner Wärmefluss ausgehend vom Wärmemuster quer zur optischen Strahlachse **(15; 25; 45; 65; 77a)** erfolgen kann, und die Schichtdicke derart dick ist, dass die Wellenfront **(17)** des einfallenden Strahls **(3; 23; 43; 90; 109)** ausgehend von einer thermischen Beaufschlagung der Modulationsschicht **(9; 29; 49; 69; 75)** durch das eingeprägte Wärmemuster veränderbar ist, **dadurch gekennzeichnet, dass** die Wärmequelle eine separate Wärmequelle ist, die nicht der optische Strahl ist.

3. Anordnung nach Anspruch 2, **dadurch gekennzeichnet, dass** die Kühlplatte **(7a, 7b; 27; 52; 72b; 73b)** im innigen Kontakt mit der wenigstens einen Grundfläche **(11a, 11b)** der Modulationsschicht **(9; 29; 49; 69; 75)** angeordnet ist.

4. Anordnung nach Anspruch 2 oder 3, **dadurch gekennzeichnet, dass** das Material der wenigstens einen Kühlplatte **(7a, 7b; 52; 63; 67a, 67b; 72a, 72b)** transparent und ohne nennenswerte Absorption für eine das Wärmemuster erzeugende Heizstrahlung **(12; 42; 58; 76; 78)** ist.

5. Anordnung nach einem der Ansprüche 2 bis 4, **dadurch gekennzeichnet, dass** das Material der wenigstens einen Kühlplatte **(7a, 7b; 27; 63)** transparent und ohne nennenswerte Absorption für die optische Strahlung **(3; 23; 62; 90)** ist.

6. Anordnung nach einem der Ansprüche 2 bis 5, **dadurch gekennzeichnet, dass** die Modulationsschicht **(9; 29; 49; 69)** transparent für die optische Strahlung **(3; 23; 43; 62)** des Strahls **(3; 23; 43; 62; 77b; 90; 109)** ist.

7. Anordnung nach einem der Ansprüche 2 bis 6, **dadurch gekennzeichnet, dass** die Modulationsschicht **(9)** durch eine vordere und eine hintere Kühlplatte **(7a, 7b)** begrenzt ist.

8. Anordnung nach einem der Ansprüche 2 bis 7, **gekennzeichnet durch** einen im innigen Kontakt mit einer der Grundflächen der Modulationsschicht **(29; 49; 59; 69; 75)** sich befindenden Spiegelbelag **(30; 50; 57a, 57b; 60),** der den einfallenden optischen Strahl **(23; 43)** mit einem vorgegebenen Reflexionsfaktor reflektiert und der Spiegelbelag **(57a, 57b)** vorzugsweise verformbar ausgebildet ist.

9. Anordnung nach einem der Ansprüche 2 bis 8, **gekennzeichnet durch** einen unmittelbar auf der der Kühlplatte gegenüberliegenden Grundfläche der Modulationsschicht angeordneten, verformbaren Schichtbelag, der für den optischen Strahl möglichst vollständig transparent ist.

10. Anordnung nach einem der Ansprüche 2 bis 9, **gekennzeichnet durch** lediglich eine für den optischen Strahl **(23)** transparente Kühlplatte **(27)** und eine auf der Kühlplatte **(27)** angeordnete Heizschicht **(31),** welche auf der Modulationsschicht **(29)** entgegengesetzt zu deren Grundfläche angeordnet ist, wobei die Heizschicht **(31)** ein örtlich unterschiedliches Wärmemuster erzeugen kann.

11. Anordnung nach einem der Ansprüche 2 bis 10, **dadurch gekennzeichnet, dass** die Modulationsschicht **(9; 29;**

**49)** eine Fluid- oder Gelschicht mit bis auf eine Toleranz gleicher Schichtdicke ist und das einzuprägende Wärmemuster mit einer auf die Modulationsschicht flächig wirkenden Heizstrahlung **(12; 42)** mit entsprechender Intensitätsverteilung einprägbar ist.

**12.** Anordnung nach einem der Ansprüche 2 bis 10, **dadurch gekennzeichnet, dass** die flächige Modulationsschicht **(75)** ein unterschiedliches Dickenprofil aufweist, das in der Modulationsschicht einzuprägende Wärmemuster durch eine einfallende weitere Strahlung erzeugbar ist, die räumliche Ausdehnung der weiteren einfallenden Strahlung wenigstens derart breit ist, dass die grösste Schichtdicke der Modulationsschicht **(75)** bestrahlbar ist, wobei die Schichtdicke der Modulationsschicht dennoch derart dünn gewählt ist, dass eine flächige Wärmeausbreitung vernachlässigbar klein ist, und sie derart dick gewählt ist, dass die Wellenfront **(17)** des einfallenden Strahls **(3; 23; 43; 90; 109)** ausgehend von einer thermischen Beaufschlagung der Modulationsschicht **(9; 29; 49; 69)** durch das eingeprägte Wärmemuster veränderbar ist, und vorzugsweise das Material der Modulationsschicht ein Fluid oder Gel ist.

**Claims**

**1.** Method for modifying a wavefront (17) of an optical beam (3; 23; 43; 90; 109) by means of a two-dimensional modulation layer (9; 29; 49; 69; 75) arranged transversely to an optical axis (15; 25; 45; 65) of the beam (3; 23; 43; 90; 109), the modulation layer being arranged so that a beam cross-section ($q_1$, $q_2$; $q_3$; $q_4$; $q_5$) of the optical beam (3; 23; 43; 62; 77b; 90; 109) is approximately completely accommodated, wherein the modulation layer (9; 29; 49; 69; 75) is charged locally with a thermal pattern, a layer thickness of the modulation layer is selected to be sufficiently thin and at least one of the two basal surfaces of the modulation layer (9; 29; 49; 69; 75) is sufficiently cooled two-dimensionally that a heat propagation in the modulation layer (9; 29; 49; 69; 75) transversely to the optical axis (15; 25; 45; 65; 77a) is negligibly small, and the layer thickness is selected to be sufficiently thick and the thermal pattern is selected to be such that the wavefront (17a) of the incident beam (3; 23; 43; 62; 90; 109), starting from a thermal action on the modulation layer (9; 29; 49; 69; 75), is modifiable by the thermal pattern, **characterised in that** a separate heat source, which is not the optical beam, is used to impress the thermal pattern.

**2.** Arrangement {80, 85, 84, (1; 41; 56; 61; 82; 83; 91; 106)} for carrying out the method according to Claim 1 for modifying a wavefront (17) of an optical beam (3; 23; 43; 62; 77b; 90; 109) having an optical axis (15; 25; 45; 65; 77a), having an influencing unit (1;21;41;56;61;82;83;91; 106), which is introducible into the beam path of the optical beam and has a two-dimensional modulation layer (9; 29; 49; 69; 75) having at least one basal surface (11 a, 11 b) and a two-dimensional extent that is large enough to accommodate a beam cross-section ($q_1$;, $q_2$; $q_3$; $q_4$; $q_5$) of the optical beam (3; 23; 43; 62; 77b; 90; 109) approximately completely, and having a heat source (12; 31; 42; 76; 80; 101; 107) with which a thermal pattern can be produced in the influencing unit (1; 21; 41; 56; 61; 82; 83; 91; 106), wherein the influencing unit (1; 21; 41; 56; 61; 82; 83; 91; 106) has at least one two-dimensional cooling plate (7a, 7b; 27; 52; 72b; 73b) running transversely to the optical axis (15; 25; 45; 65), wherein the basal surface (11a, 11b) of the modulation layer (9; 29; 49; 69; 75) is coolable with the at least one cooling plate (7a, 7b; 27; 52; 72b; 73b), the modulation layer (9; 29; 49; 69; 75) is designed for at least partial absorption of the heat of the heat source and the layer thickness of the modulation layer (9; 29; 49; 69; 75) is designed to be sufficiently small that, together with the two-dimensional cooling by the cooling plate (7a, 7b; 27; 52; 72b; 73b), only a negligibly small thermal flow, starting from the thermal pattern, transversely to the optical beam axis (15; 25; 45; 65; 77a) can take place, and the layer thickness is sufficiently thick that the wavefront (17) of the incident beam (3; 23; 43; 90; 109), starting from thermal action on the modulation layer (9; 29; 49; 69; 75), is modifiable by the impressed thermal pattern, **characterised in that** the heat source is a separate heat source, which is not the optical beam.

**3.** Arrangement according to Claim 2, **characterised in that** the cooling plate (7a, 7b; 27; 52; 72b; 73b) in arranged in intimate contact with the at least one basal surface (11 a, 11 b) of the modulation layer (9; 29; 49; 69; 75).

**4.** Arrangement according to Claim 2 or 3, **characterised in that** the material of the at least one cooling plate (7a, 7b; 52; 63; 67a, 67b; 72a, 72b) is transparent and without appreciable absorption for the radiant heat (12; 42; 58; 76; 78) generating the thermal pattern.

**5.** Arrangement according to any one of Claims 2 to 4, **characterised in that** the material of the at least one cooling plate (7a, 7b; 27; 63) is transparent and without appreciable absorption for the optical radiation (3; 23; 62; 90).

**6.** Arrangement according to any one of Claims 2 to 5, **characterised in that** the modulation layer (9; 29; 49; 69) is transparent to the optical radiation (3; 23; 43; 62) of the beam (3; 23; 43; 62; 77b; 90; 109).

7. Arrangement according to any one of Claims 2 to 6, **characterised in that** the modulation layer (9) is limited by a front and a rear cooling plate (7a, 7b).

8. Arrangement according to any one of Claims 2 to 7, **characterised by** a reflective covering (30; 50; 57a, 57b; 60) that is in intimate contact with one of the basal surfaces of the modulation layer (29; 49; 59; 69; 75) and reflects the incident optical beam (23; 43) with a predetermined reflection factor, and the reflective covering (57a, 57b) is preferably of deformable construction.

9. Arrangement according to any one of Claims 2 to 8, **characterised by** a deformable reflective covering that is arranged directly on the basal surface of the modulation layer opposite the cooling plate and is as completely transparent to the optical beam as possible.

10. Arrangement according to any one of Claims 2 to 9, **characterised by** merely one cooling plate (27) transparent to the optical beam (23) and by a heating layer (31) arranged on the cooling plate (27), which heating layer is arranged on the modulation layer (29) opposite to the basal surface of the same, wherein the heating layer (31) is capable of generating a locally different thermal pattern.

11. Arrangement according to any one of Claims 2 to 10, **characterised in that** the modulation layer (9; 29; 49) is a fluid layer or gel layer having an identical layer thickness apart from a tolerance, and the thermal pattern to be impressed is arranged to be impressed with a corresponding intensity distribution by means of radiant heat (12; 42) acting two-dimensionally on the modulation layer.

12. Arrangement according to any one of Claims 2 to 10, **characterised in that** the two-dimensional modulation layer (75) has a different thickness profile, the thermal pattern to be impressed on the modulation layer is producible by further incident radiation, the spatial extent of the further incident radiation is at least suficiently wide that the largest layer thickness of the modulation layer (75) is irradiatable, the layer thickness of the modulation layer nevertheless being selected to be sufficiently thin that a two-dimensional thermal propagation is negligibly small, and it is selected to be sufficiently thick that the wavefront (17) of the incident beam (3; 23; 43; 90, 109), starting from a thermal action on the modulation layer (9; 29; 49; 69), is modifiable by the impressed thermal pattern, and preferably the material of the modulation layer is a fluid or gel.

## Revendications

1. Procédé permettant de modifier un front d'onde (17) d'un faisceau optique (3 ; 23 ; 43 ; 90 ; 109) au moyen d'une couche de modulation (9 ; 29 ; 49 ; 69 ; 75) disposée en nappe transversalement à un axe optique (15 ; 25 ; 45 ; 65) du faisceau (3 ; 23 ; 43 ; 90 ; 109), laquelle est disposée de telle sorte qu'une section transversale de faisceau (q1 ; q2 ; q3 ; q4 ; q5) du faisceau optique (3 ; 23 ; 43 ; 62 ; 77b ; 90 ; 109) est reçue pratiquement entièrement, où la couche de modulation (9 ; 29 ; 49 ; 69 ; 75) est recouverte localement d'un système de chaleur, une épaisseur de couche de la couche de modulation est sélectionnée mince, et la couche de modulation (9 ; 29 ; 49; 69 ; 75) est refroidie en nappe au moins sur une de ses deux surfaces de base, de sorte qu'une diffusion de la chaleur dans la couche de modulation (9 ; 29 ; 49 ; 69 ; 75) est négligemment faible transversalement à l'axe optique (15 ; 25 ; 45 ; 65 ; 77a), et l'épaisseur de couche est sélectionnée épaisse et le système de chaleur est sélectionné, de telle sorte que le front d'onde (17a) du faisceau incident (3 ; 23 ; 43 ; 62 ; 90 ; 109) à partir d'une alimentation thermique de la couche de modulation (9 ; 29 ; 49 ; 69 ; 75) est modifiable par le système de chaleur, **caractérisé en ce qu'**une source de chaleur séparée qui n'est pas le faisceau optique est utilisée pour l'application du système de chaleur.

2. Dispositif {80, 85, 84, (1 ; 41 ; 56 ; 61 ; 82 ; 83 ; 91 ; 106)} pour réaliser le procédé selon la revendication 1 permettant de modifier un front d'onde (17) d'un faisceau optique (3 ; 23 ; 43 ; 62 ; 77b ; 90 ; 109) comprenant un axe optique (15 ; 25 ; 45 ; 65 ; 77a) avec une unité d'influence (1 ; 21 ; 41 ; 56 ; 61 ; 82 ; 83 ; 91 ; 106) pouvant être déposée dans sa trajectoire de faisceau, avec une couche de modulation (9 ; 29 ; 49 ; 69 ; 75) en nappe comprenant au moins une surface de base (11a, 11b), laquelle comprend une extension en nappe qui est suffisamment importante pour qu'une section transversale de faisceau (q1 ; q2 ; q3 ; q4 ; q5) du faisceau optique (3 ; 23 ; 43 ; 62 ; 77b ; 90 ; 109) puisse être reçue pratiquement entièrement, et avec une source de chaleur (12 ; 31 ; 42 ; 76 ; 80 ; 101 ; 107) avec laquelle un système de chaleur peut être produit dans l'unité d'influence (1 ; 21 ; 41 ; 56 ; 61 ; 82 ; 83 ; 91 ; 106), moyennant quoi l'unité d'influence (1 ; 21 ; 41 ; 56 ; 61 ; 82 ; 83 ; 91 ; 106) comprend au moins une plaque de refroidissement (7a, 7b ; 27 ; 52 ; 72b ;. 73b) en nappe s'étendant transversalement à l'axe optique (15 ; 25 ; 45 ; 65), moyennant quoi la surface de base (11a, 11b) de la couche de modulation (9 ; 29 ; 49 ; 69 ; 75) peut être refroidie avec la au moins une plaque de refroidissement (7a, 7b ; 27 ; 52 ; 72b ; 73b), la couche de modulation (9 ; 29 ; 49 ; 69 ; 75) est configurée pour l'absorption au moins partielle de la chaleur de la source de chaleur, et l'épaisseur de couche de la couche de modulation (9 ; 29 ; 49 ; 69 ; 75) est réalisée peu importante, de telle sorte que conjointement avec le refroidissement en nappe par la plaque de refroidissement (7a, 7b ; 27 ; 52 ; 72b ; 73b), seul un flux de chaleur négligemment faible à partir du système de chaleur peut avoir lieu transversalement à l'axe de faisceau optique (15 ; 25 ; 45 ; 65 ; 77a), et l'épaisseur de couche est épaisse de sorte que le front d'onde (17) du faisceau incident (3 ; 23 ; 43 ; 90 ; 109) à partir d'une alimentation thermique de la couche de modulation (9 ; 29 ; 49 ; 69 ; 75) est modifiable par le système de chaleur appliqué, **caractérisé en ce que** la source de chaleur est une source de chaleur séparée qui n'est pas le faisceau optique.

3. Dispositif selon la revendication 2, **caractérisé en ce que** la plaque de refroidissement (7a, 7b ; 27 ; 52 ; 72b ; 73b) est disposée en contact intime avec la au moins une surface de base (11a, 11b) de la couche de modulation (9 ; 29 ; 49 ; 69 ; 75).

4. Dispositif selon la revendication 2 ou 3, **caractérisé en ce que** le matériau de la au moins une plaque de refroidissement (7a, 7b ; 27 ; 52 ; 63 ; 67b ; 72a, 72b) est transparent et dépourvu d'absorption notable pour un rayonnement de chaleur (12; 42 ; 58 ; 76 ; 78) produisant le système de chaleur.

5. Dispositif selon une des revendications 2 à 4, **caractérisé en ce que** le matériau de la au moins une plaque de refroidissement (7a, 7b ; 27 ; 63) est transparent et dépourvu d'absorption notable pour le rayonnement optique (3 ; 23 ; 43 ; 62 ; 90).

6. Dispositif selon une des revendications 2 à 5, **caractérisé en ce que** la couche de modulation (9 ; 29 ; 49 ; 69) est transparente pour le faisceau optique (3 ; 23 ; 43 ; 62) du faisceau (3 ; 23 ; 43 ; 62 ; 77b ; 90 ; 109).

7. Dispositif selon une des revendications 2 à 6, **caractérisé en ce que** la couche de modulation (9) est limitée par une plaque de refroidissement avant et arrière (7a, 7b).

8. Dispositif selon une des revendications 2 à 7, **caractérisé par** un tain (30 ; 50 ; 57a ; 57b ; 60) se trouvant en contact intime avec une des surfaces de base de la couche de modulation (29 ; 49 ; 59 ; 69 ; 75), lequel réfléchit le faisceau optique incident (23; 43) avec un facteur de réflexion spécifié, et le tain (57a, 57b) est configuré de préférence déformable.

9. Dispositif selon une des revendications 2 à 8, **caractérisé par** un revêtement de couche déformable disposé directement sur la surface de base, opposée à la plaque de refroidissement, de la couche de modulation, lequel revêtement est le plus possible entièrement transparent pour le faisceau optique.

10. Dispositif selon une des revendications 2 à 9, **caractérisé** seulement par une plaque de refroidissement (27) transparente pour le faisceau optique (23) et une couche de chauffage (31) disposée sur la plaque de refroidissement (27), laquelle est disposée sur la couche de modulation (29) à l'opposé de sa surface de base, où la couche de chaleur (31) peut produire un système de chaleur variable localement.

11. Dispositif selon une des revendications 2 à 10, **caractérisé en ce que** la couche de modulation (9 ; 29 ; 49) est une couche de fluide ou de gel avec une même épaisseur de couche jusqu'à une tolérance, et le système de chaleur à appliquer peut être appliqué avec un rayonnement de chaleur (12 ; 42) agissant en nappe sur la couche de modulation avec une répartition d'intensité correspondante.

12. Dispositif selon une des revendications 2 à 10, **caractérisé en ce que** la couche de modulation (75) en nappe présente un profil d'épaisseur variable qui peut être produit dans le système de chaleur à appliquer dans la couche de modulation par un autre rayonnement incident, l'extension spatiale de l'autre rayonnement incident est au moins large de telle sorte que l'épaisseur de couche la plus importante de la couche de modulation (75) peut être rayonnée, moyennant quoi l'épaisseur de couche de la couche de modulation est sélectionnée mince de telle sorte qu'une diffusion de chaleur est négligemment faible, et elle est sélectionnée épaisse de sorte que le front d'onde (17) du faisceau incident (3 ; 23 ; 43 ; 90 ; 109) à partir d'une alimentation thermique de la couche de modulation (9 ; 29 ; 49 ; 69) est modifiable par le système de chaleur appliqué, et de préférence le matériau de la couche de modulation est un fluide ou un gel.

Fig. 1

Fig. 2

Fig. 5

a)

$X$

$T$

$T_0$

b)

$X$

$n$

$n_0$

c)

$X$

$C_{medium}$

$C_{Vakuum}/n_0$

Fig. 3

Fig. 6

Fig. 8

Fig. 4

Fig. 7

Fig. 9

Fig.10

Fig. 11

Fig. 12